# EUROPEAN PATENT SPECIFICATION

(11) **EP 2 933 170 B1**
(45) Date of publication and mention of the grant of the patent: **08.08.2018**
(21) Application number: 15152384.2
(22) Date of filing: 23.01.2015
(51) Int. Cl.: B62D 25/02, B60J 5/04, E05C 1/04, B62D 33/037

(54) **MANUALLY OPERATED FASTENER FOR THE SIDE BOARDS OF INDUSTRIAL VEHICLE BODIES**
VON HAND BEDIENBARES BEFESTIGUNGSELEMENT FÜR DIE ÖFFNUNGSFÄHIGEN SEITENWÄNDE VON LASTFAHRZEUGEN
ÉLÉMENT DE FIXATION MANUELLE POUR LES PAROIS LATÉRALES OUVRABLES DE VÉHICULES INDUSTRIELLES

(30) Priority: 28.01.2014 IT VR20140020
(43) Date of publication of application: 21.10.2015
(73) Proprietor: Quinario SA, 6987 Caslano (CH)
(72) Inventor: Mayr, Thomas, 6963 Lugano (CH)
(74) Representative: Ponchiroli, Simone

(56) References cited:
- EP-A1- 2 567 882
- US-A- 6 021 603
- US-A1- 2002 000 736

## Description

This invention relates to a manually operated fastener for the side boards of industrial vehicle bodies.

In particular, this invention relates to a fastener of the type comprising a hollow containment casing, elongate along a vertical main axis of extension (at least when the side board is in the hooking/unhooking position), and inside which an insert is slidably mounted, a pin with an enlarged head being fixed to the insert. The pin is positioned perpendicularly to the main axis of extension and comes out of a lateral wall of the containment casing so that it can engage with and disengage from a containment pocket fixed to a different part of the vehicle body.

Depending on requirements, the side board can be closed either by fixing the side board to an upright rigidly connected to the frame of the vehicle body, or by fixing the side board to another side board. In the former case, it is possible both to mount the fastener on the side board and the pocket on the upright, or vice versa. In contrast, in the latter case, the fastener is mounted on one of the two side boards and the pocket on the other. Hooking and unhooking are achieved by moving the insert inside the containment casing and thereby causing the pin to translate between an engaging position in which the head of the pin is inserted in the pocket and a disengaging position in which the head is outside the pocket.

According to the prior art, the movement of the insert may occur in other ways. However, in practically all of the prior art cases there is a movement mechanism comprising an operating lever connected to the insert in such a way as to cause the translation of the insert by means of a rotation of the lever. In particular, when the insert is in the locking position the lever is positioned parallel to the main axis of extension and is practically completely inserted in the containment casing. Moreover, in that position, the lever prevents the fastener from being accidentally released. In order to unhook the side board, the lever is then rotated outwards (upwards or downwards) and causes a translation of the insert. Whilst in the older fasteners at the end of the rotation the lever remained almost perpendicular to the main axis of extension, therefore constituting a significant danger for operators working close to the vehicle body, in more recent solutions at the end of the rotation the lever is positioned adjacent to the containment casing and is only slightly angled relative to it so as to minimise the risks for operators.

However, the prior art system is not without disadvantages.

First, even in more recent solutions, the lever for moving the insert is still a danger for the operator, although reduced, because it still has to project outwards to some extent.

Second, all of the prior art solutions, and in particular the more recent ones, have a relatively complex movement mechanism which therefore involves a relatively high production cost.

Finally, EP 2567882 discloses a vehicle body which comprises an openable side board and one hooking unit for locking the openable side board, where the looking unit in turn comprises a supporting body and a hooking element which is rotatably connected to a pin fixed to the supporting body and able to rotate between a locking position and a releasing position. The hooking element comprises a first, operating end, and a second end which in use can be hooked to a fixed contact element. The hooking element is also able to move, relative to the supporting body, orthogonally to the main axis of rotation, between an extended position and a retracted position. Elastic return means are interposed between the supporting body and the hooking element for pushing the hooking element towards the retracted position. The hooking element comprises a sealed housing rotatably and slidably associated with the pin, and in which the elastic return means are positioned.

In this context, the technical purpose which forms the basis of this invention is to provide a manually operated fastener for the side boards of industrial vehicle bodies which overcomes the above-mentioned disadvantages.

In particular, the technical purpose of this invention is to provide a manually operated fastener for the side boards of industrial vehicle bodies which minimises the risks to operators and which is simpler, and therefore less expensive, than prior art fasteners.

The technical purpose specified and the aims indicated are substantially achieved by a manually operated fastener for the side boards of industrial vehicle bodies made as described in the appended claims.

Further features and the advantages of this invention are more apparent in the detailed description, with reference to the accompanying drawings which illustrate a preferred, non-limiting embodiment of a manually operated fastener for the side boards of industrial vehicle bodies, in which:
- Figure 1 is an axonometric three-quarter front view of an insert of a fastener made according to a first embodiment of this invention;
- Figure 2 is a rear view of the insert of Figure 1;
- Figure 3 is a side view of the insert of Figure 1;
- Figure 4 is a cross-section of the insert of Figure 2 according to the line IV - IV;
- Figure 5 is a cross-section of the insert of Figure 3 according to the line V - V of Figure 4;
- Figure 6 shows the insert of Figure 2 seen from the left-hand side;
- Figure 7 is a cross-section of the insert of Figure 2 according to the line VII - VII;
- Figure 8 is a cross-section of the insert of Figure 2 according to the line VIII - VIII;
- Figure 9 is a cross-section of the insert of Figure 2 according to the line IX - IX;
- Figure 10 is an axonometric front view of a finishing element engageable in the insert of Figure 1;
- Figure 11 is an axonometric rear view of the finishing element of Figure 10;
- Figure 12 is a front view of a fastener made according to this invention, also comprising a contact element, and which is positioned in a hooking configuration;
- Figure 13 shows the fastener of Figure 12 seen from the right-hand side;
- Figure 14 is a cross-section of the fastener of Figure 13 according to the line XIV - XIV;
- Figure 15 is a cross-section of the fastener of Figure 12 according to the line XV - XV;
- Figure 16 is a top view of the fastener of Figure 12;
- Figure 17 is an enlarged view of the detail XVII of Figure 14;
- Figure 18 is an enlarged view of the detail XVIII of Figure 15;
- Figure 19 is an enlarged view of the detail XIX of Figure 15;
- Figure 20 shows the fastener of Figure 12 in an unhooking configuration;
- Figure 21 is a cross-section of the fastener of Figure 20 according to the cross-section plane XIV - XIV of Figure 13;
- Figure 22 is a cross-section of the fastener of Figure 20 according to the plane XXII - XXII;
- Figure 23 is an enlarged view of the detail XXIII of Figure 21;
- Figure 24 is an enlarged view of the detail XXIV of Figure 22; and
- Figure 25 is an enlarged view of the detail XXIV of Figure 22;
- Figure 26 is an axonometric three-quarter front view of a fastener made according to a second embodiment of this invention;
- Figure 27 is an exploded view of the fastener of Figure 26;
- Figure 28 is a transparent side view of the fastener of Figure 26 with its insert in a first position which in use corresponds to locking of the side board and with a related selective locking unit in a locking position;
- Figure 29 shows the fastener of Figure 28 with the insert in the first position and the selective locking unit in a releasing position; and
- Figure 30 shows the fastener of Figure 28 with the insert in a second position which in use corresponds to releasing of the side board.

With reference to the accompanying drawings, the numeral 1 denotes in its entirety a manually operated fastener for the side boards of industrial vehicle bodies according to this invention.

Similarly to prior art fasteners, even the fastener according to this invention comprises first a hollow containment casing 2 in which an insert 3 is slidably inserted.

Depending on requirements, in use the containment casing 2 may be fixed either to a side board of an industrial vehicle body or to another part of the vehicle body to which the side board must be hooked. It should be noticed that similarly to what is indicated relative to the prior art, in the case of this invention too, the other part of the vehicle body to which the side board must be hooked may be either a part rigidly fixed to the frame (such as an upright) or another side board.

The containment casing 2 also has a main axis of extension which, at least when the side board is closed, is positioned perpendicularly to the loading platform of the vehicle body.

In the preferred embodiments, illustrated in the accompanying drawings, the containment casing 2 comprises a tubular body 4 (advantageously metal) with a substantially rectangular cross-section, having two larger sides and two smaller sides, closed by plugs 5 at the ends.

The containment casing 2 also comprises a main opening 6, made in a first face 7 of it parallel to the main axis of extension which in use is facing outwards from the vehicle body, and a secondary opening 8 made in a second face 9 of it positioned transversally relative to the first face 7. In the preferred embodiments the main opening 6 and the secondary opening 8 are made in the tubular body 4, respectively at one of the larger sides and one of the smaller sides of the rectangular cross-section.

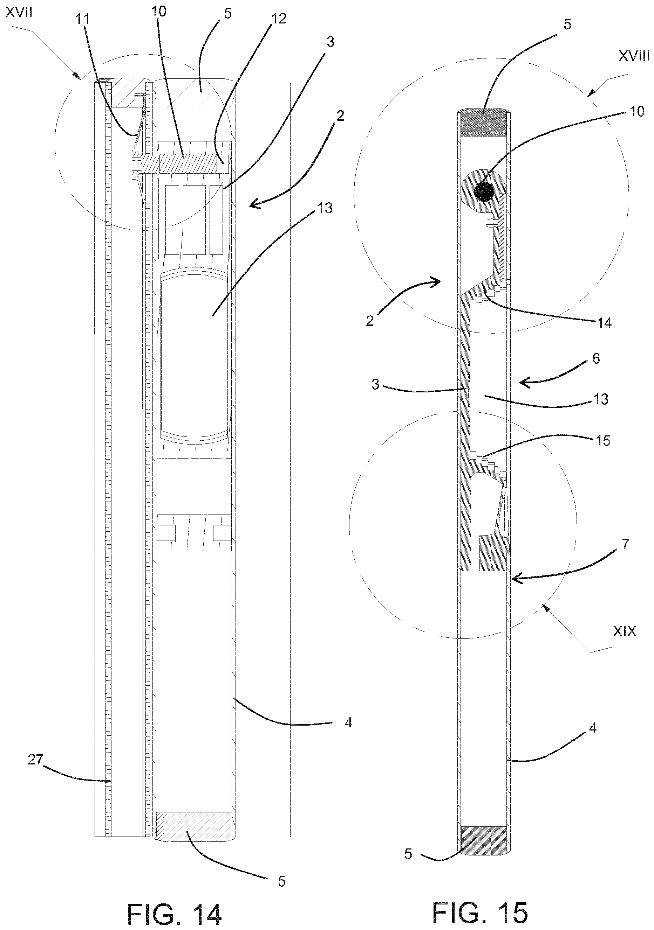

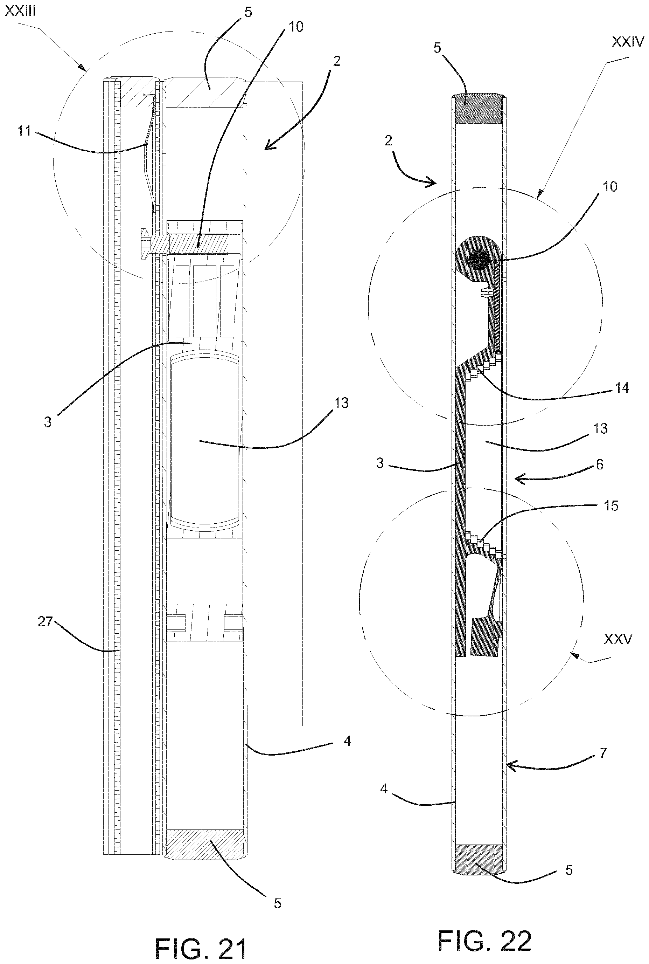

As already indicated, the insert 3 is slidably inserted in the containment casing 2, and is movable along the main axis of extension between a first position (Figures 14 and 15) and a second position (Figures 21 to 22). As is explained in more detail below, the first position in use corresponds to side board locking, whilst the second position in use corresponds to side board releasing.

At least a first connecting element 10 is fixed to the insert 3 and is positioned at the secondary opening 8 both when the insert 3 is in the first position and when it is in the second position. That first connecting element 10 in use is hookable to a second connecting element 11 which is respectively fixed to the other part of the vehicle body or to the side board. In the preferred embodiments the two connecting elements 10, 11 are constituted, one of a pin with an enlarged head, and the other of a pocket in which the enlarged head of the pin is hookable (in the known way the pocket comprises a U-shaped flange in which the pin engages). In the embodiments illustrated in the accompanying drawings, the first connecting element 10 is constituted of the pin and is screwed into a tubular seat 12 made in the insert 3 and extending perpendicular to the main axis of extension.

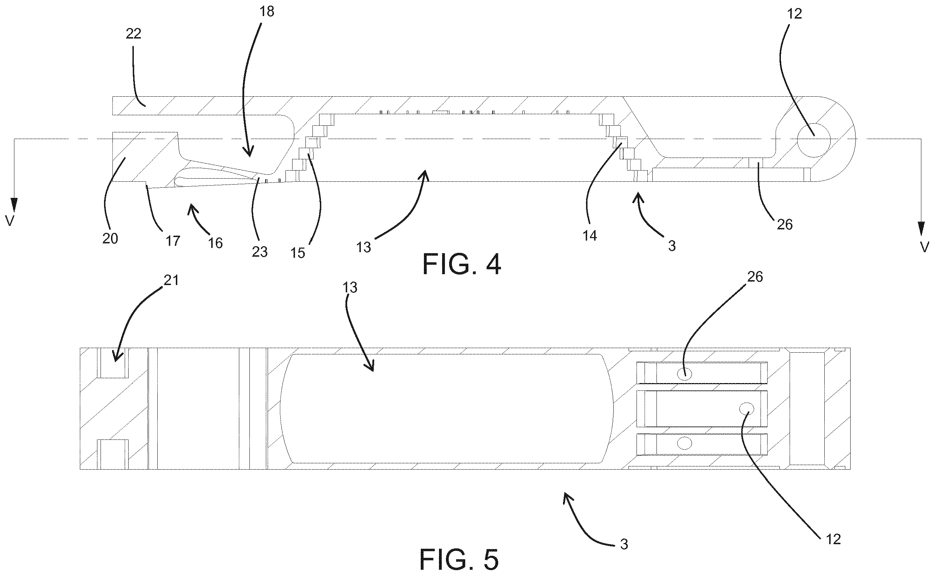

According to a first inventive aspect of this invention, the insert 3 comprises a movement recess 13 accessible through the main opening 6 both when the insert 3 is in the first position and when the insert 3 is in the second position, and by means of which the insert 3 can be moved between the first position and the second position. As shown for example in Figure 4, along the main axis of extension the insert 3 is delimited by a first wall 14 and a second wall 15 which are positioned transversally to the main axis of extension and on which the user can act to cause shifting of the insert 3 between the first position and the second position. In particular, the user pushes on the first wall 14 to cause shifting of the insert 3 towards the first position and on the second wall 15 to cause shifting of the insert 3 towards the second position. In the embodiments illustrated, the first wall 14 and the second wall 15 are stepped, concave with the concavities facing each other, and converge with one another towards the inside of the recess 13. Whilst in the preferred embodiments the entire recess 13 is always completely facing the main opening 6 irrespective of whether or not the insert 3 is in the first position, in the second position or in an intermediate position, in other embodiments it is sufficient that when the insert 3 is in the first position the second wall 15 is accessible and that when the insert 3 is in the second position the first wall 14 is accessible.

According to a second inventive aspect of this invention, the fastener 1 also comprises a selective locking unit 16 which is associated with the insert 3 and is switchable, at least when the insert 3 is in the first position, between a locking position in which it prevents the insert 3 from sliding towards the second position, and a releasing position in which allows insert 3 sliding towards the second position. The function of the selective locking unit 16 is to prevent the side board from being accidentally unhooked. Advantageously, the selective locking unit 16 comprises an engagement element 17 connected respectively either to the insert 3 or to the containment casing 2 and engageable respectively either with the containment casing 2 or with the insert 3 when the insert 3 is in the first position and the selective locking unit 16 is in the locking position. The fastener 1 also comprises elastic means 18 which act on the engagement element 17 for pushing it towards the locking position.

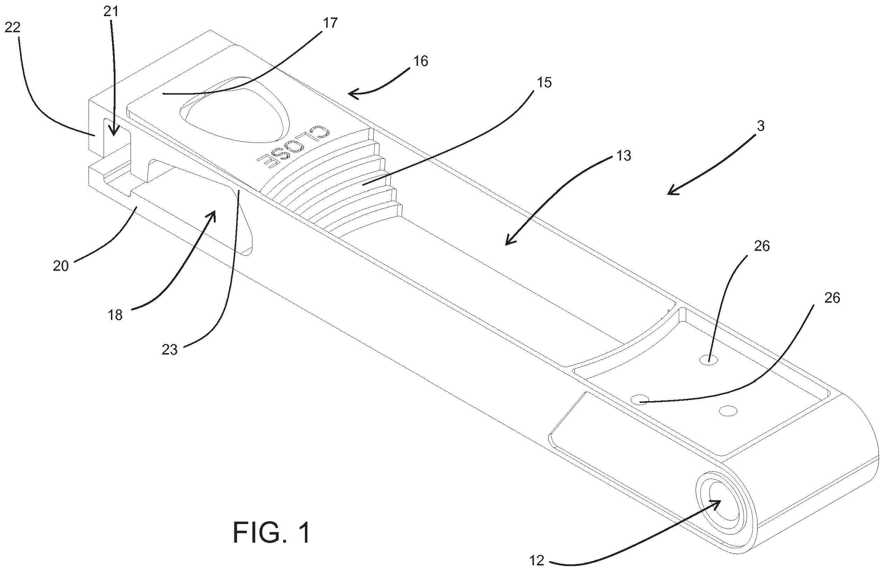

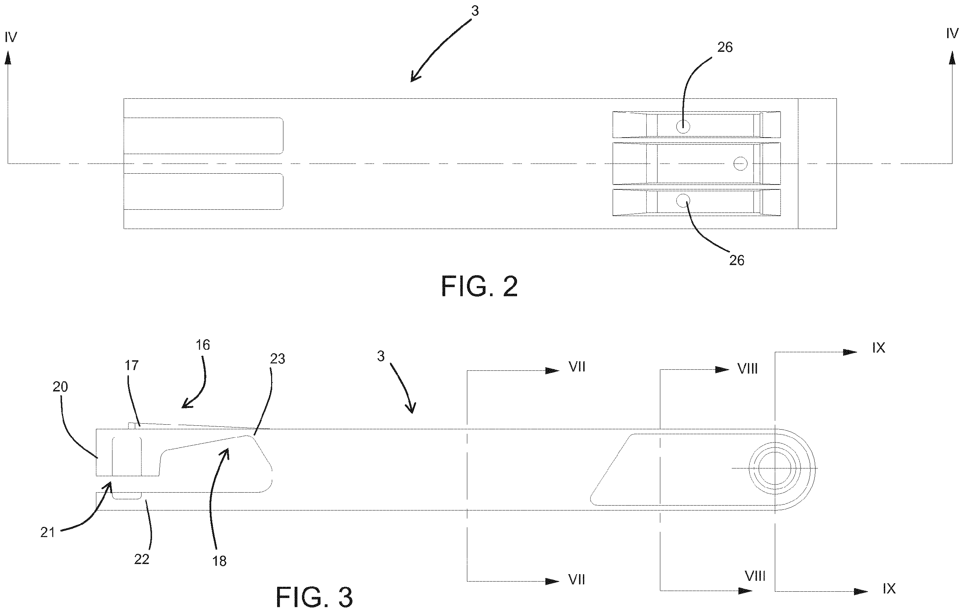

However, in the preferred embodiments the engagement element 17 is connected to the insert 3 and, when the insert 3 is in the first position and the selective locking unit 16 is in the locking position, the engagement element 17 is accessible through the main opening 6 and is engaged with an edge 19 of the main opening 6 extending transversally to the main axis of extension. Advantageously, thanks to the fact that in the locking position the engagement element 17 is at the main opening 6, the engagement element 17 can be switched from the locking position to the releasing position by a pressure applied directly on it. In the preferred embodiments, the engagement element 17 is constituted of a projecting tooth fixed to the insert 3 (Figures 1 and 3).

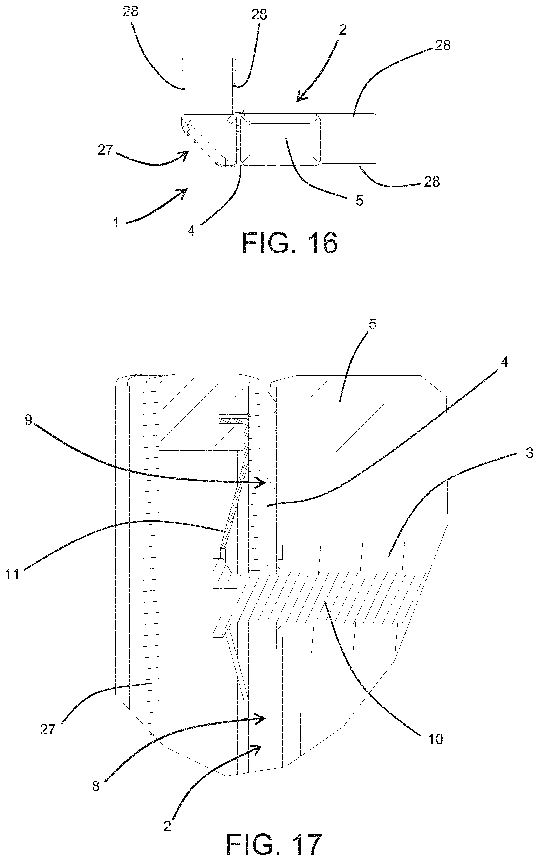

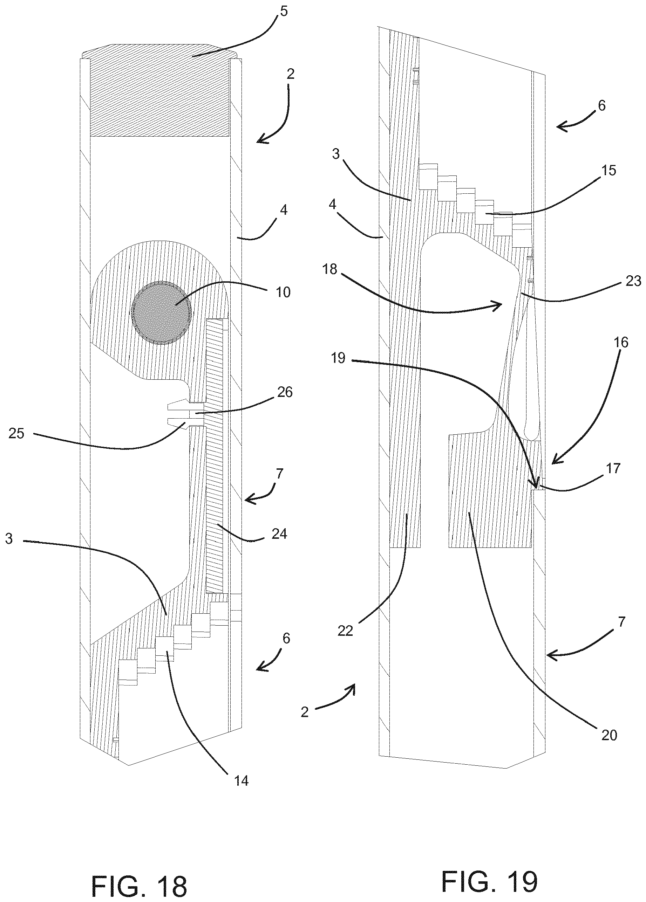

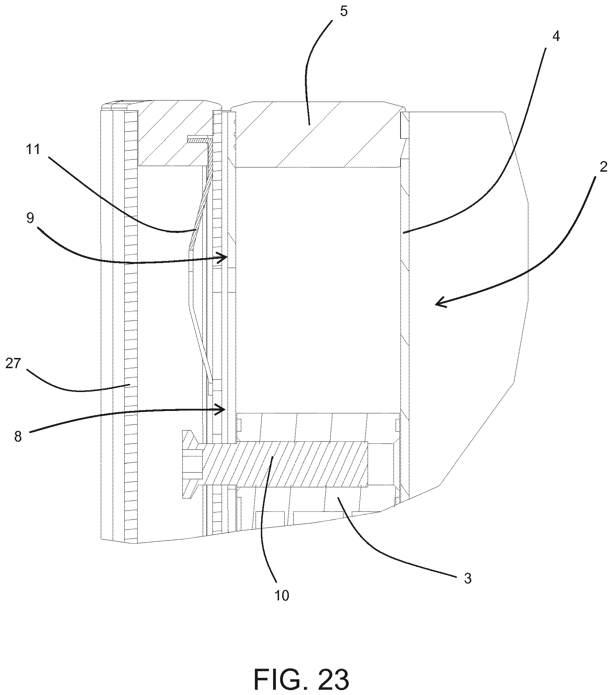

In particular, in the first embodiment illustrated in Figures 1 to 25, the insert 3 comprises a locking portion 20 which is deformable or shiftable relative to the rest of the insert 3, and to which the engagement element 17 is connected. The switching of the engagement element 17 from the locking position to the releasing position occurs by deformation or shifting of the locking portion 20 relative to the rest of the insert 3.

However, in the first embodiment illustrated, the locking portion 20 is elastically deformable relative to the rest of the insert 3 and is part of, or constitutes, the elastic means 18. In fact, depending on requirements, the elastic means 18 may be constituted exclusively of the elastic deformability of the locking portion 20 or may also comprise one or more springs which act on the locking portion 20. For example, in the first embodiment illustrated two springs could be inserted in the two first housings 21 made on the side of the locking portion 20 opposite that where the engagement element 17 is made.

As shown in particular in Figures 1, 3 and 4, in that embodiment the insert 3 comprises two cantilever portions 20, 22 extending mainly parallel to the main axis of extension, facing one another and spaced from each other. One of these portions is the locking portion 20 and has a reduced thickness at the zone 23 where it is connected to the rest of the insert 3 for increasing its deformability (Figure 4). The other 22 can act as a fixed contact element for any springs (in fact, the above-mentioned first housings 21 are also present in that cantilever portion) or as a guide for sliding of the insert 3 inside the containment casing 2.

Thanks to the special shape of the fastener 1 according to this invention, in all of the positions of the insert 3 the overall dimensions of the fastener 1 always substantially correspond only to those of the containment casing 2 (see Figures 15 and 22). In other words, whatever position the insert 3 is in, there are no parts of the fastener 1 projecting from the main opening 6 except for the engagement element 17. The only part which, if present, has to project relative to the containment casing 2 is in fact the pin with the enlarged head.

Moreover, in the first embodiment illustrated, the insert 3 and the selective locking unit 16 are made in one piece.

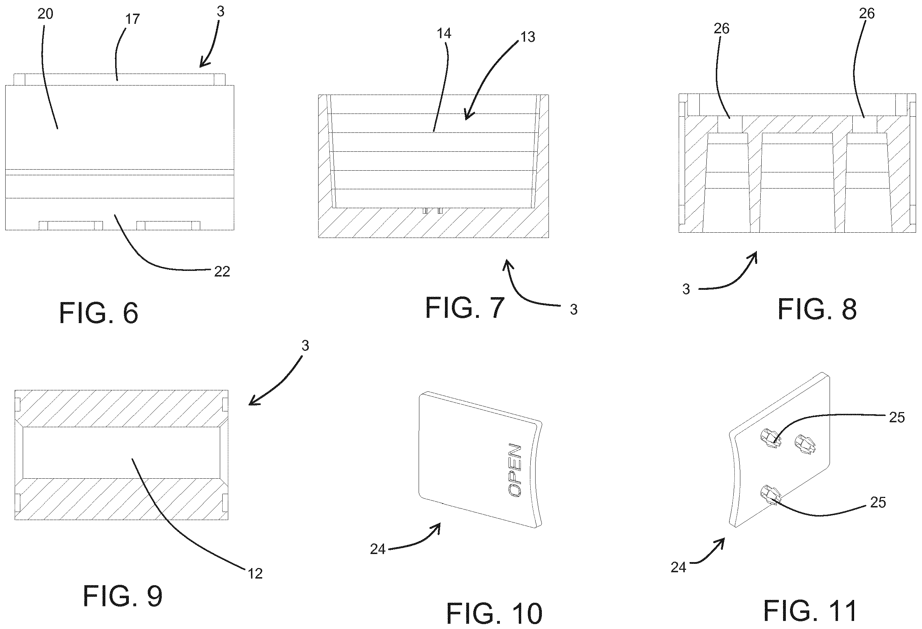

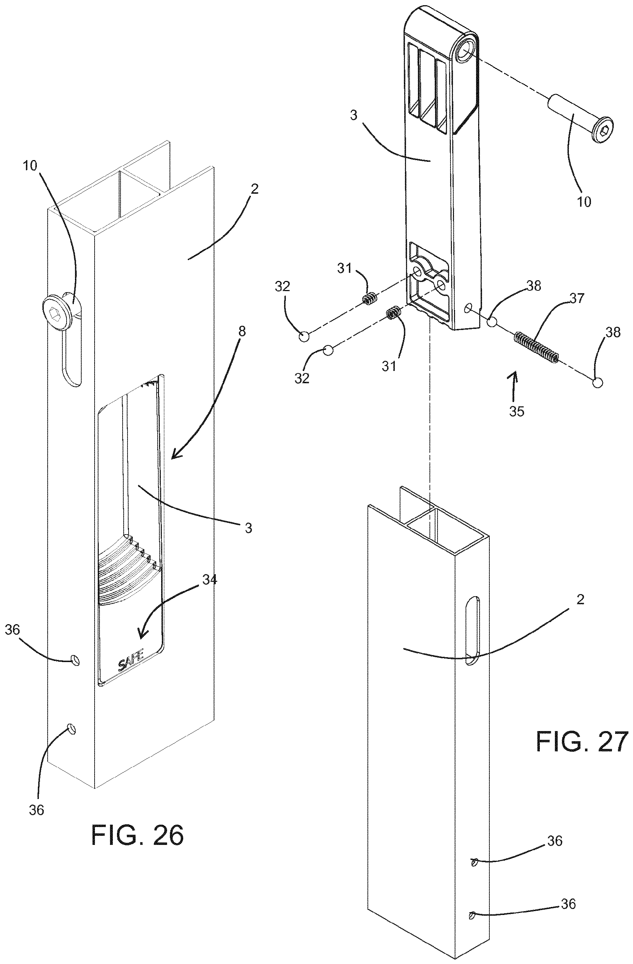

Furthermore, in the first embodiment illustrated a finishing element 24 may also be applied to the insert 3. The finishing element is only shown in Figures 10 and 11, being constituted of a customisable plate (the accompanying drawings show, by way of example only, the text "OPEN" to indicate that when that text is visible the fastener 1 is released, and similarly the text "CLOSE" directly on the insert 3 which, when visible, indicates that the fastener 1 is in the locking configuration). On the back of the finishing element there are three irreversible hooking heads 25 insertable in corresponding holes 26 made in the insert 3. The finishing element 24 also has a safety function. In fact, the finishing element 24 is positioned on the insert 3 in such a way that it is at least partly facing the main opening 6 when the insert is not in the first position and in contrast is completely not facing the main opening 6 and is therefore hidden from view when the insert 3 is in the first position. In fact, in this way, by making the finishing element 24 in a different colour to the insert 3, it is possible to visually show the operator when the fastener is not completely closed. In fact, if the operator can see the colour of the finishing element 24, he knows that the fastener is still not correctly closed. However, the same result may also be achieved in other ways, such as that shown by way of example in Figure 26 and described in detail below.

Figures 26 to 30 show a second embodiment of this invention which differs from the first exclusively as regards the structure of the insert 3 and of the elastic means 18. Consequently, for greater clarity, in Figures 26 to 30 many parts corresponding to those of the preceding figures are not shown.

Again in the second embodiment, the engagement element 17 is connected to the insert 3. But in this case, the elastic means 18 are positioned between the insert 3 and the containment casing 2 for pushing the engagement element 17 towards the locking position at least when the insert 3 is in the first position. That is in particular advantageously achieved thanks to the fact that the elastic means 18 act between the insert 3 and an inner surface 30 of the containment casing opposite to the wall in which the main opening 6 is made.

Moreover, in the second embodiment illustrated, the elastic means 18 comprise one or more first springs 31, advantageously helical springs, associated with the insert 3 and, for each first spring 31, at least one element for contact 32 interposed between the related first spring 31 and the above-mentioned inner surface 30 of the containment casing 2. Each element for contact 32 is positioned in such a way that it slides on the inner surface 30 of the containment casing 2 during the shifting movements of the insert 3 between the first position and the second position. Preferably each element for contact 32 is constituted of a metal sphere or half-sphere.

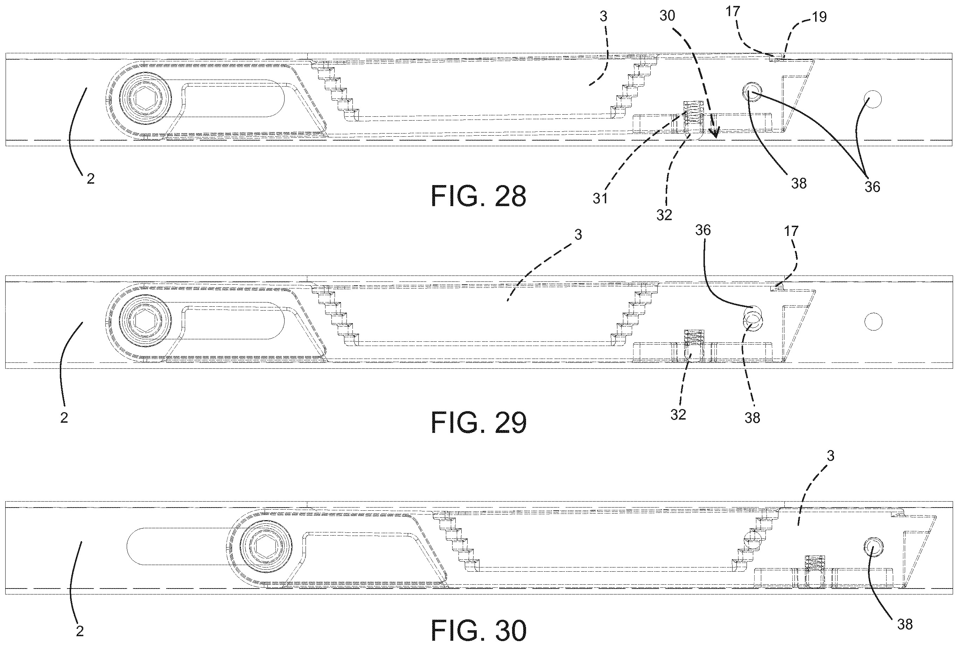

Also, in the second embodiment illustrated, the insert 3 pivots about an axis of rotation passing through the first connecting element 10 and the secondary opening 8 (the axis of rotation is advantageously defined by the cooperation between the pin which constitutes the first connecting element 10 and the slot which constitutes the secondary opening 8). The switching of the engagement element 17 between the locking position (Figure 28) and the releasing position (Figure 29) therefore occurs by means of a rotation of the insert 3 about said axis of rotation. In particular, when going from the locking position to the releasing position the rotation occurs by overcoming the opposition of the elastic means 18, whilst when going in the opposite direction it is driven by the elastic means 18.

Moreover, only in Figure 26, on the insert 3 there is a text 34 ("SAFE") positioned in such a way that it is completely visible only when the insert 3 is in the first position, therefore indicating that the side board is correctly locked.

To guarantee correct positioning of the insert 3 in the first positon and in the second position, in the case of the second embodiment illustrated, the insert 3 is equipped with selective engaging means 35 couplable to suitable second housings 36 made in the containment casing 2 when the insert 3 is respectively in the first position (with the selective locking unit 17 in the locking position) and in the second position. In particular, the selecting engaging means 35 comprise a second helical spring 37 positioned in such a way that it passes through the insert 3 and is perpendicular to its line of movement. At its ends, said spring pushes two spheres 38 against the inner surface 30 of the containment casing 2. In the above-mentioned positions, the spheres 38 are designed to be partly inserted in holes made in the containment casing 2 which constitute the second housings 36. Obviously, similar selective engaging means 35 may also be provided in the first embodiment.

Finally, it should be noticed that nothing prevents connection to the insert 3 of further elastic elements designed to push it towards one of its positions, as well as the provision of devices similar to the selective locking unit 16 also to hold the insert 3 in the second position.

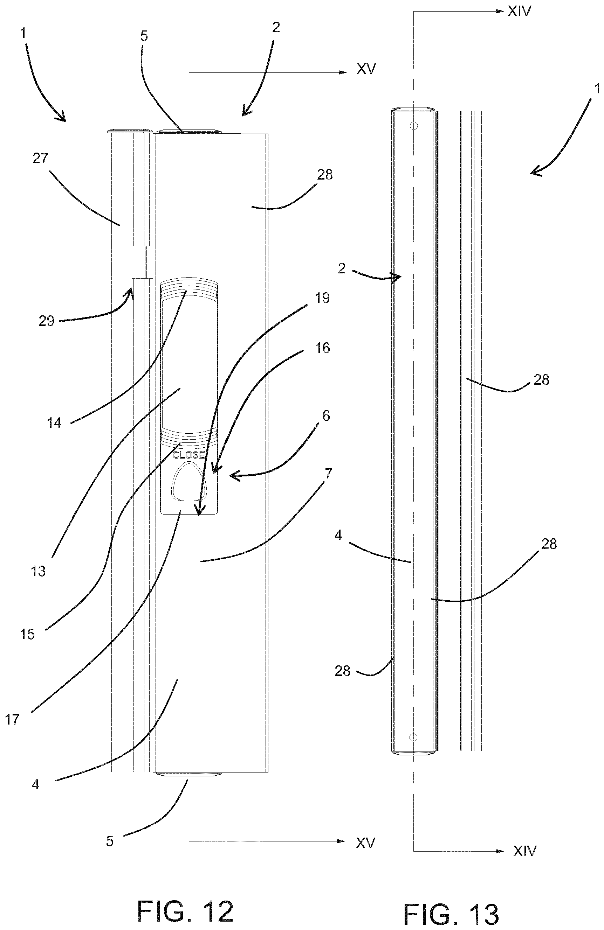

This invention may relate both to fasteners 1 which comprise exclusively the containment casing 2 and the various parts mounted in it described above, and to fasteners 1 which also comprise a supporting element 27 which is elongate and on which the second connecting element 11 is mounted, as illustrated in Figures 12 to 25.

In this latter case, the containment casing 2 and the supporting element 27 are intended to be fixed, one to the openable side board whose opening and closing 1 is to be controlled, and the other to a different part of the vehicle body. However, in the case of the embodiments illustrated, both are intended to be mounted on openable side boards which can therefore be hooked to one another. For that purpose, both the containment casing 2 and the supporting element 27 comprise projecting flanges 28 between which it is possible to insert the side boards in such a way that the containment casing 2 and the supporting element 27 constitute an end element of the related side board.

However, in general, the supporting element 27 and the containment casing 2 are positionable side by side and in contact, in such a way that the first connecting element 10 can be moved, by shifting the insert 3, between an engaging position in which it is connected to the second connecting element 11 (when the insert 3 is in the first position - Figure 14) and a position for disengaging from the second connecting element 11 (when the insert 3 is in the second position - Figure 21).

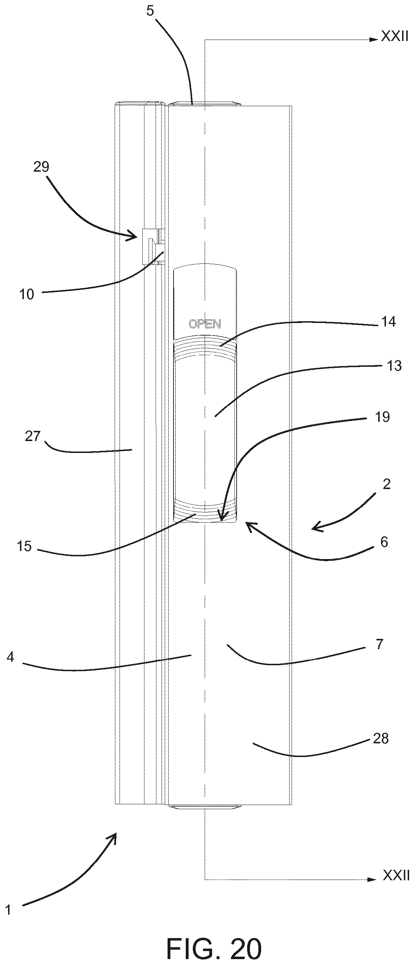

When the first connecting element 10 is constituted of the pin with an enlarged head or of another projecting element, the supporting element 27 advantageously comprises a window 29 with which the pin is aligned when the insert 3 is in the second position (Figure 20) and which allows the passage of the pin when the side board is opened and closed.

Finally, obviously, this invention also relates to an industrial vehicle body comprising at least one openable side board, movable between a closed position 1 and an open position, and which is equipped with the fastener 1 described above.

In general, the side board is provided with an end element at a smaller side of it, and there is a contact element fixed to a part (fixed or movable) of the vehicle body other than the side board equipped with the end element. Depending on the embodiments, the fastener 1 may constitute respectively the end element of the side board and/or the contact element. In other words, the end element and the contact element comprise, one the containment casing 2 and everything contained in it, and the other the supporting element 27 with the second connecting element 11.

In the closed position 1 of the side board, the end element is positioned adjacent to the contact element (or, more precisely, is at least positionable adjacent to it if the latter is in turn fixed to a movable side board of the vehicle body).

Operation of the fastener 1 according to this invention derives immediately from the description of the structure above.

In a situation with the side board closed and locked (Figures 14 and 15 and 28), the insert 3 is in its first position and the first connecting element 10 is hooked to the second connecting element 11 (in the accompanying drawings the enlarged head is hooked to the pocket). To prevent the side board from accidentally opening, the selective locking unit 16 is in the locking position. Therefore, the tooth is inserted in the main opening 6 and is hooked to the edge 19 of it. In the first embodiment illustrated, that also means that the locking portion 20 is not deformed.

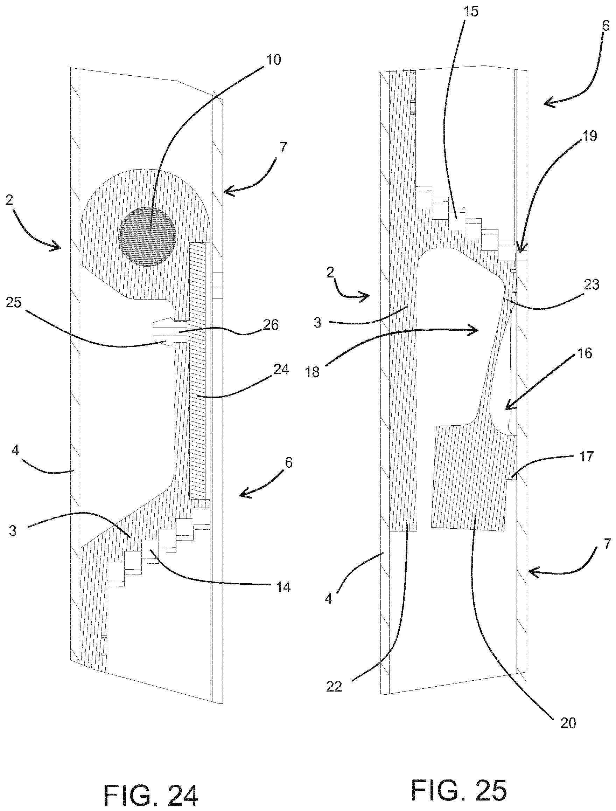

When an operator wants to open the side board, he acts on the selective locking unit 16 to move it to the releasing position and then the insert 3 is shifted to the second position, disengaging the first connecting element 10 from the second connecting element 11. In particular, in the first embodiment illustrated, the tooth is pressed towards the inside of the containment casing 2, deforming the locking portion 20, until it is uncoupled from the edge 19 of the main opening 6, then the insert 3 is pushed towards the second position. At that point, the tooth slides as it rests on the inner part of the containment casing 2 as shown in Figure 25. In contrast, in the second embodiment illustrated, the tooth is pressed towards the inside of the containment casing 2, disengaging the spheres from the 38 second housings 36 and making the insert 3 rotate about the axis of rotation, overcoming the resistance of the elastic means 18, until the tooth is uncoupled from the edge 19 of the main opening 6. Then the insert 3 is pushed towards the second position. At that point, the tooth slides as it rests on the inner part of the containment casing 2 as shown in Figure 30. When the insert 3 reaches the second position (and the spheres 38 are coupled to the correspondent second housings 36), the side board is free and can be opened.

In contrast, when an operator wants to lock the side board, after again positioning it so that it is drawn near to the contact element, it is sufficient to make the insert 3 slide towards the first position until the selecting locking unit 16 is free to return to the locking position (in the cases illustrated until the tooth is free to go back into the main opening 6, driven by the elastic means 18).

In fact, it should be noticed that although in the embodiments illustrated fastener 1 releasing and locking are carried out respectively by moving the insert 3 downwards and upwards, in other embodiments there may even be an opposite movement (in that case maintenance of the hooking between the first connecting element 10 and the second connecting element 11 is also favoured by gravity).

This invention brings important advantages.

First, thanks to this invention it was possible to provide a manually operated fastener for the side boards of industrial vehicle bodies which is completely free of elements which may be a danger for operators, whatever configuration the fastener is in.

Second, the fastener according to this invention is significantly simpler and less expensive than the prior art fasteners.

Finally, it should be noticed that this invention is relatively easy to produce and that even the cost linked to implementing the invention is not very high. The invention described above may be modified and adapted in several ways without thereby departing from its scope as defined by the appended claims. All details of the invention may be substituted with other technically equivalent elements and the materials used, as well as the shapes and dimensions of the various components, may vary according to requirements.

## Claims

1. A manually operated fastener for the side boards of industrial vehicle bodies, comprising
a hollow containment casing (2) in use fixable to a side board of an industrial vehicle body or to another part of the body, the containment casing (2) having a main axis of extension and comprising a main opening (6) made in a first face (7) of it parallel to the main axis of extension which in use is facing outwards from the body and a secondary opening (8) made in a second face (9) of it positioned transversally relative to the first face (7);
an insert (3) slidably inserted in the containment casing (2), movable along the main axis of extension between a first position and a second position and comprising a movement recess (13) accessible through the main opening (6) both when the insert (3) is in the first position and when the insert (3) is in the second position, and by means of which the insert (3) can be moved between the first position and the second position;
at least a first connecting element (10) fixed to the insert (3) and positioned at the secondary opening (8) both when the insert (3) is in the first position and when it is in the second position, and in use hookable to a second connecting element (11) respectively fixed to the other part of the body or to the side board; and
a selective locking unit (16) switchable, at least when the insert (3) is in the first position, between a locking position in which it prevents the insert (3) from sliding towards the second position, and a releasing position in which it allows insert (3) sliding towards the second position.

2. The fastener according to claim 1, **characterised in that** the selective locking unit (16) comprises an engagement element (17) connected respectively to the insert (3) or to the containment casing (2) and engageable respectively with the containment casing (2) or with the insert (3) when the insert (3) is in the first position and the selective locking unit (16) is in the locking position, and **in that** the fastener (1) also comprises elastic means (18) which act on the engagement element (17) for pushing it towards the locking position.

3. The fastener according to claim 2, **characterised in that** the engagement element (17) is connected to the insert (3) and **in that**, when the insert (3) is in the first position and the selective locking unit (16) is in the locking position, the engagement element (17) is accessible through the main opening (6) and can engage with an edge (19) of the main opening (6) extending transversally to the main axis of extension.

4. The fastener according to claim 2 or 3, **characterised in that** the engagement element (17) is connected to the insert (3) and **in that** the elastic means (18) are positioned between the insert (3) and the containment casing (2) for pushing the engagement element (17) towards the locking position at least when the insert (3) is in the first position.

5. The fastener according to claim 4, **characterised in that** the elastic means (18) comprise one or more first springs (31) associated with the insert (3) and, for each first spring (31), at least one element for contact (32) interposed between the related first spring (31) and an inner surface (30) of the containment casing (2), each element for contact (32) sliding on the inner surface (30) of the containment casing (2) during the shifting of the insert (3) between the first position and the second position.

6. The fastener according to claim 4 or 5, **characterised in that** the insert pivots about an axis of rotation passing through the first connecting element (10) and through the secondary opening (8), the switching of the engagement element between the locking position and the releasing position occurring by means of a rotation of the insert (3) about said axis of rotation.

7. The fastener according to claim 2 or 3, **characterised in that** the insert (3) comprises a locking portion (20) which is deformable or shiftable relative to the rest of the insert (3), and to which the engagement element (17) is connected.

8. The fastener according to claim 7, **characterised in that** the insert (3) comprises two cantilever portions (20), (22) extending mainly parallel to the main axis of extension, facing one another and spaced from each other, one of the cantilever portions (20), (22) constituting the locking portion (20).

9. The fastener according to claim 7 or 8, **characterised in that** the engagement element (17) is a projecting tooth fixed to the locking portion (20).

10. The fastener according to any one of claims 7 to 9, **characterised in that** the locking portion (20) is elastically deformable relative to the rest of the insert (3) and is part of the elastic means (18).

11. The fastener according to any one of the preceding claims, **characterised in that** in all of the positions of the insert (3), the overall dimensions **of the fastener** substantially correspond to those of the containment casing (2).

12. The fastener according to any one of the preceding claims, **characterised in that** the insert (3) and the selective locking unit (16) are made in one piece.

13. The fastener according to any one of the preceding claims, **characterised in that** it also comprises a finishing element (24) applied to the insert (3), having a different colour to that of the insert (3) and positioned on the insert (3) in such a way that it is at least partly facing the main opening (6) when the insert is not in the first position and in contrast is completely not facing the main opening (6) and is hidden from view when the insert (3) is in the first position.

14. The fastener according to any one of the preceding claims, **characterised in that** it also comprises an elongate supporting element (27) on which the second connecting element (11) is mounted, the supporting element (27) and the containment casing (2) being positionable side by side in such a way that the first connecting element (10) and the second connecting element (11) are connected to one another when the insert (3) is in the first position and disengaged from each other when the insert (3) is in the second position.

15. An industrial vehicle body comprising:
at least one openable side board, movable between a closed position and an open position, and equipped with an end element at a smaller side of it; and
a contact element fixed to a part of the body which is not the side board;
in the side board closed position the end element being positioned or positionable adjacent to the contact element;
**characterised in that** it comprises a fastener (1) according to any one of the preceding claims which constitutes respectively the end element of the side board and/or the contact element, **in that** respectively the contact element or the end element comprise said second connecting element (11), and **in that**, when the side board is in the closed position and the end element is adjacent to the contact element, the first connecting element (10) is constrained to the second connecting element (11) for preventing movement of the side board when the insert (3) is in the first position and is disengaged from the second connecting element (11) when the insert (3) is in the second position, for allowing shifting of the side board towards the open position.

## Patentansprüche

1. Ein von Hand bedienbares Befestigungselement für die Seitenwände der Fahrgestellaufbauten von Industriefahrzeugen, Folgendes umfassend:
ein hohles Behältergehäuse (2), das im Gebrauch an einer Seitenwand eines Fahrgestellaufbaus eines Industriefahrzeugs oder an einem anderen Teil des Aufbaus befestigt werden kann, das Behältergehäuse (2) erstreckt sich dabei über eine Hauptachse und umfasst eine Hauptöffnung (6), die in einer ersten Seite (7) davon, parallel zur Haupterstreckungsachse, ausgespart ist, welche im Gebrauch vom Aufbau nach außen zeigt, und eine zweite Öffnung (8), die in einer zweiten Seite (9) davon, quer zur ersten Seite (7) platziert, ausgespart ist;
einen Einsatz (3), der verschiebbar in das Behältergehäuse (2) eingefügt ist und sich auf der Haupterstreckungsachse zwischen einer ersten Position und einer zweiten Position verschieben lässt und eine Bewegungsmulde (13) umfasst, die durch die Hauptöffnung (6) zugänglich ist, sowohl dann, wenn der Einsatz (3) in der ersten Position ist, als auch dann, wenn der Einsatz (3) in der zweiten Position ist, und durch die der Einsatz (3) zwischen der ersten Position und der zweiten Position verschoben werden kann;
mindestens ein erstes Verbindungselement (10), das am Einsatz (3) befestigt ist und an der zweiten Öffnung (8) positioniert ist, sowohl, wenn der Einsatz (3) in der ersten Position ist, als auch dann, wenn er in der zweiten Position ist, und das im Gebrauch an einem zweiten Verbindungselement (11) eingehakt werden kann, das seinerseits am anderen Teil des Aufbaus oder an der Seitenwand befestigt ist; und
eine selektive Verriegelungseinheit (16), die, zumindest wenn der Einsatz (3) in der ersten Position ist, zwischen einer verriegelten Position, in der sie verhindert, dass der Einsatz (3) zur zweiten Position rutscht, und einer Freigabeposition, in der sie erlaubt, dass der Einsatz (3) zur zweiten Position rutscht, umschaltbar ist.

2. Das Befestigungselement nach dem Patentanspruch 1, **gekennzeichnet dadurch, dass** die selektive Verriegelungseinheit (16) ein Eingriffselement (17) umfasst, das mit dem Einsatz (3) beziehungsweise mit dem Behältergehäuse (2) verbunden ist und mit dem Einsatz (3) beziehungsweise mit dem Behältergehäuse (2) gekoppelt werden kann, wenn der Einsatz (3) in der ersten Position ist und die selektive Verriegelungseinheit (16) in der Verriegelungsposition ist, und dadurch, dass das Befestigungselement (1) außerdem elastische Mittel (18) umfasst, welche auf das Eingriffselement (17) einwirken, um es in die Verriegelungsposition zu schieben.

3. Das Befestigungselement nach dem Patentanspruch 2, **gekennzeichnet dadurch, dass** das Eingriffselement (17) mit dem Einsatz (3) verbunden ist, und dadurch, dass das Eingriffselement (17), wenn der Einsatz (3) in der ersten Position ist und die selektive Verriegelungseinheit (16) in der Verriegelungsposition ist, durch die Hauptöffnung (6) erreichbar ist und an einem Rand (19) der Hauptöffnung (6), der sich quer zur Haupterstreckungsachse erstreckt, einrasten kann.

4. Das Befestigungselement nach den Patentansprüchen 2 oder 3, **gekennzeichnet dadurch, dass** das Eingriffselement (17) mit dem Einsatz (3) verbunden ist und dadurch, dass die elastischen Mittel (18) zwischen dem Einsatz (3) und dem Behältergehäuse (2) angebracht sind, um das Eingriffselement (17) in die Verriegelungsposition zu schieben, zumindest dann, wenn der Einsatz (3) in der ersten Position ist.

5. Das Befestigungselement nach dem Patentanspruch 4, **gekennzeichnet dadurch, dass** die elastischen Mittel (18) eine oder mehrere erste Federn (31) umfassen, die mit dem Einsatz (3) fest verbunden sind und für jede erste Feder (31) mindestens ein Kontaktelement (32) haben, das zwischen der entsprechenden ersten Feder (31) und einer Innenfläche (30) des Behältergehäuses (2) eingefügt ist, jedes Kontaktelement (32) verschiebt sich dabei auf der Innenfläche (30) des Behältergehäuses (2) während des Verschiebens des Einsatzes (3) zwischen der ersten Position und der zweiten Position.

6. Das Befestigungselement nach den Patentansprüchen 4 oder 5, **gekennzeichnet dadurch, dass** sich der Einsatz um eine Rotationsachse, durch das erste Verbindungselement (10) und durch die zweite Öffnung (8) verlaufend, dreht, das Umschalten des Eingriffselements zwischen der Verriegelungsposition und der Freigabeposition erfolgt dabei mittels einer Drehung des Einsatzes (3) um besagte Rotationsachse.

7. Das Befestigungselement nach den Patentansprüchen 2 oder 3, **gekennzeichnet dadurch, dass** der Einsatz (3) einen Verriegelungsabschnitt (20) umfasst, welcher verformbar oder in Bezug auf den Rest des Einsatzes (3) verschiebbar ist und mit dem das Eingriffselement (17) verbunden ist.

8. Das Befestigungselement nach dem Patentanspruch 7, **gekennzeichnet dadurch, dass** der Einsatz (3) zwei Kragabschnitte (20), (22) umfasst, die sich hauptsächlich parallel zur Haupterstreckungsachse erstrecken, einander gegenüberliegen und voneinander beabstandet sind, einer der Kragabschnitte (20), (22) stellt dabei den Verriegelungsabschnitt (20) dar.

9. Das Befestigungselement nach den Patentansprüchen 7 oder 8, **gekennzeichnet dadurch, dass** das Eingriffselement (17) ein hervorstehender Zahn ist, der am Verriegelungsabschnitt (20) befestigt ist.

10. Das Befestigungselement nach jedem der Patentansprüche 7 bis 9, **gekennzeichnet dadurch, dass** der Verriegelungsabschnitt (20) in Bezug auf den Rest des Einsatzes (3) elastisch verformbar ist und Teil der elastischen Mittel (18) ist.

11. Das Befestigungselement nach jedem der vorherigen Patentansprüche, **gekennzeichnet dadurch, dass** in allen Positionen des Einsatzes (3) die generellen Abmessungen des Befestigungselements im Wesentlichen mit denen des Behältergehäuses (2) übereinstimmen.

12. Das Befestigungselement nach jedem der vorherigen Patentansprüche, **gekennzeichnet dadurch, dass** der Einsatz (3) und die selektive Verriegelungseinheit (16) aus einem Stück hergestellt sind.

13. Das Befestigungselement nach jedem der vorherigen Patentansprüche, **gekennzeichnet dadurch, dass** es außerdem ein Abschlusselement (24) umfasst, das am Einsatz (3) angebracht ist und eine andere Farbe als diejenige des Einsatzes (3) hat und solcherart am Einsatz (3) befestigt ist, dass es zumindest teilweise der Hauptöffnung (6) zugewandt ist, wenn der Einsatz nicht in der ersten Position ist und im Gegensatz dazu vollständig von der Hauptöffnung (6) abgewandt ist und nicht sichtbar ist, wenn der Einsatz (3) in der ersten Position ist.

14. Das Befestigungselement nach jedem der vorherigen Patentansprüche, **gekennzeichnet dadurch, dass** es außerdem ein längliches Halterelement (27) umfasst, an dem das zweite Verbindungselement (11) montiert ist, das Halterelement (27) und das Behältergehäuse (2) können dabei solcherart nebeneinander positioniert werden, dass das erste Verbindungselement (10) und das zweite Verbindungselement (11) miteinander verbunden sind, wenn der Einsatz (3) in der ersten Position ist, und voneinander getrennt sind, wenn der Einsatz (3) in der zweiten Position ist.

15. Ein Fahrgestellaufbau eines Industriefahrzeugs, Folgendes umfassend:
mindestens eine Seitenwand, die geöffnet werden kann, verschiebbar zwischen einer geschlossenen Position und einer offenen Position, und an ihrer schmaleren Seite mit einem Endelement ausgestattet ist; und
ein Kontaktelement, das an einem Teil des Aufbaus befestigt ist, welcher nicht die Seitenwand ist;
in der geschlossenen Position der Seitenwand ist das Endelement dabei am Kontaktelement positioniert oder kann dort positioniert werden;
**gekennzeichnet dadurch, dass** er ein Befestigungselement (1) nach jedem der vorherigen Patentansprüche umfasst, welches jeweils das Endelement der Seitenwand und/oder das Kontaktelement darstellt, dadurch, dass das Kontaktelement beziehungsweise das Endelement besagtes zweites Verbindungselement (11) umfasst, und dadurch dass, wenn die Seitenwand in der geschlossenen Position ist und das Endelement sich am Kontaktelement befindet, das erste Verbindungselement (10) an das zweite Verbindungselement (11) gepresst wird, um die Bewegung der Seitenwand zu verhindern, wenn der Einsatz (3) in der ersten Position ist, und vom zweiten Verbindungselement (11) gelöst ist, wenn der Einsatz (3) in der zweiten Position ist, um die Verschiebung der Seitenwand in die geöffnete Position zu erlauben.

## Revendications

1. Un élément de fixation manuelle pour les ridelles latérales de carrosseries de véhicules industriels, comprenant
un corps de logement (2) creux pouvant être fixé, en utilisation, à une ridelle latérale d'une carrosserie de véhicule industriel ou à une autre partie de la carrosserie, le corps de logement (2) ayant un axe principal d'extension et comprenant une ouverture principale (6) réalisée dans une première face (7) respective parallèle à l'axe principal d'extension qui, en utilisation, est orientée vers l'extérieur de la carrosserie et une ouverture secondaire (8) réalisée dans une deuxième face (9) respective disposée transversalement par rapport à la première face (7) ;
un insert (3) introduit de façon coulissante dans le corps de logement (2), mobile le long de l'axe principal d'extension entre une première position et une deuxième position et comprenant un renfoncement d'actionnement (13) accessible à travers l'ouverture principale (6) aussi bien lorsque l'insert (3) est dans la première position que lorsque l'insert (3) est dans la deuxième position, et par l'intermédiaire duquel l'insert (3) peut être déplacé entre la première position et la deuxième position ;
au moins un premier élément de raccordement (10) fixé à l'insert (3) et positionné au niveau de l'ouverture secondaire (8) aussi bien lorsque l'insert (3) est dans la première position que lorsqu'il est dans la deuxième position et pouvant être accroché, en utilisation, à un deuxième élément de raccordement (11) fixé respectivement à l'autre partie de la carrosserie ou à la ridelle latérale ; et
un organe de blocage sélectif (16) pouvant être commuté, au moins lorsque l'insert (3) est dans la première position, entre une position de blocage dans laquelle il empêche l'insert (3) de coulisser vers la deuxième position, et une position de déblocage dans laquelle il permet à l'insert (3) de coulisser vers la deuxième position.

2. L'élément de fixation selon la revendication 1, **caractérisé en ce que** l'organe de blocage sélectif (16) comprend un élément d'assujettissement (17) raccordé respectivement à l'insert (3) ou au corps de logement (2) et pouvant être assujetti respectivement avec le corps de logement (2) ou avec l'insert (3) lorsque l'insert (3) est dans la première position et l'organe de blocage sélectif (16) est dans la position de blocage, et **en ce que** l'élément de fixation (1) comprend aussi des moyens élastiques (18) qui agissent sur l'élément d'assujettissement (17) pour le pousser vers la position de blocage.

3. L'élément de fixation selon la revendication 2, **caractérisé en ce que** l'élément d'assujettissement (17) est raccordé à l'insert (3) et **en ce que**, lorsque l'insert (3) est dans la première position et l'organe de blocage sélectif (16) est dans la position de blocage, l'élément d'assujettissement (17) est accessible à travers l'ouverture principale (6) et peut assujettir un bord (19) de l'ouverture principale (6) s'étendant transversalement à l'axe principal d'extension.

4. L'élément de fixation selon la revendication 2 ou 3, **caractérisé en ce que** l'élément d'assujettissement (17) est raccordé à l'insert (3) et **en ce que** les moyens élastiques (18) sont positionnés entre l'insert (3) et le corps de logement (2) pour pousser l'élément d'assujettissement (17) vers la position de blocage au moins lorsque l'insert (3) est dans la première position.

5. L'élément de fixation selon la revendication 4, **caractérisé en ce que** les moyens élastiques (18) comprennent un ou plusieurs premiers ressorts (31) associés à l'insert (3) et, pour chaque premier ressort (31), au moins un élément de contact (32) interposé entre le premier ressort (31) correspondant et une surface intérieure (30) du corps de logement (2), chaque élément de contact (32) coulissant sur la surface intérieure (30) du corps de logement (2) pendant le déplacement de l'insert (3) entre la première position et la deuxième position.

6. L'élément de fixation selon la revendication 4 ou 5, **caractérisé en ce que** l'insert pivote autour d'un axe de rotation passant par le premier élément de raccordement (10) et par l'ouverture secondaire (8), la commutation de l'élément d'assujettissement entre la position de blocage et la position de déblocage ayant lieu par le biais d'une rotation de l'insert (3) autour dudit axe de rotation.

7. L'élément de fixation selon la revendication 2 ou 3, **caractérisé en ce que** l'insert (3) comprend une portion de blocage (20) qui peut être déformé ou déplacée par rapport au reste de l'insert (3), et à laquelle est raccordé l'élément d'assujettissement (17).

8. L'élément de fixation selon la revendication 7, **caractérisé en ce que** l'insert (3) comprend deux portions en porte-à-faux (20), (22) s'étendant principalement parallèlement à l'axe principal d'extension, situées l'une en face de l'autre et espacées entre elles, une des portions en porte-à-faux (20), (22) constituant la portion de blocage (20).

9. L'élément de fixation selon la revendication 7 ou 8, **caractérisé en ce que** l'élément d'assujettissement (17) est une dent en saillie fixée à la portion de blocage (20).

10. L'élément de fixation selon l'une quelconque des revendications de 7 à 9, **caractérisé en ce que** la portion de blocage (20) est élastiquement déformable par rapport au reste de l'insert (3) et fait partie des moyens élastiques (18).

11. L'élément de fixation selon l'une quelconque des revendications précédentes, **caractérisé en ce que**, dans toutes les positions de l'insert (3), les dimensions hors-tout de l'élément de fixation correspondent essentiellement à celles du corps de logement (2).

12. L'élément de fixation selon l'une quelconque des revendications précédentes, **caractérisé en ce que** l'insert (3) et l'organe de blocage sélectif (16) sont réalisés en une seule pièce.

13. L'élément de fixation selon l'une quelconque des revendications précédentes, **caractérisé en ce qu'**il comprend aussi un élément de finition (24) appliqué sur l'insert (3), ayant une couleur différente de celle de l'insert (3) et positionné sur l'insert (3) de manière à être au moins partiellement en face de l'ouverture principale (6) lorsque l'insert n'est pas dans la première position et, par contre, à n'être pas du tout en face de l'ouverture principale (6) et à être caché à la vue lorsque l'insert (3) est dans la première position.

14. L'élément de fixation selon l'une quelconque des revendications précédentes, **caractérisé en ce qu'**il comprend aussi un élément de support (27) allongé sur lequel est monté le deuxième élément de raccordement (11), l'élément de support (27) et le corps de logement (2) pouvant être positionnés côte à côte de manière à ce que le premier élément de raccordement (10) et le deuxième élément de raccordement (11) soient raccordés l'un à l'autre lorsque l'insert (3) est dans la première position et dégagés l'un de l'autre lorsque l'insert (3) est dans la deuxième position.

15. Une carrosserie de véhicule industriel comprenant :
au moins une ridelle latérale ouvrable, mobile entre une position de fermeture et une position d'ouverture, et équipée d'un élément d'extrémité au niveau d'un petit côté de celle-ci ; et
un élément de contact fixé à une partie de la carrosserie qui n'est pas la ridelle latérale ;
dans la position de fermeture de la ridelle latérale, l'élément d'extrémité étant positionné ou pouvant être positionné adjacent à l'élément de contact ; **caractérisée en ce qu'**elle comprend un élément de fixation (1) selon l'une quelconque des revendications précédentes qui constitue respectivement l'élément d'extrémité de la ridelle latérale et/ou l'élément de contact, **en ce que** l'élément de contact ou l'élément d'extrémité comprennent respectivement ledit deuxième élément de raccordement (11), et **en ce que**, lorsque la ridelle latérale est dans la position de fermeture et l'élément d'extrémité est adjacent à l'élément de contact, le premier élément de raccordement (10) est contraint au deuxième élément de raccordement (11) pour empêcher tout mouvement de la ridelle latérale lorsque l'insert (3) est dans la première position et est dégagé du deuxième élément de raccordement (11) lorsque l'insert (3) est dans la deuxième position, pour permettre le déplacement de la ridelle latérale vers la position d'ouverture.
